# EUROPEAN PATENT SPECIFICATION

(11) **EP 2 699 724 B1**
(45) Date of publication and mention of the grant of the patent: **10.06.2015**
(21) Application number: 12723390.6
(22) Date of filing: 20.04.2012
(51) Int. Cl.: D06F 39/12, F16M 7/00, F25D 23/10, A47L 15/42

(54) **A HOUSEHOLD APPLIANCE**
HAUSHALTSGERÄT
APPAREIL ÉLECTROMÉNAGER

(30) Priority: 22.04.2011 TR 201103952
(43) Date of publication of application: 26.02.2014
(73) Proprietor: Arçelik Anonim Sirketi, 34950 Istanbul (TR)
(72) Inventor: TURAN, Seda, 34950 Istanbul (TR); DURMAZ, Mehmet, 34950 Istanbul (TR); BAKYUZ, Murat, 34950 Istanbul (TR)
(86) International application number: PCT/EP2012/057313
(87) International publication number: WO 2012/143529

(56) References cited:
- WO-A1-2010/049551
- WO-A2-2007/068665
- DE-A1-102010 054 772
- US-A1- 2010 300 138

## Description

The present invention relates to a household appliance wherein the height adjustment is performed by adjusting the height of the feet that support the body.

In household appliances such as the dishwasher, washing machine or the refrigerator, the feet that support the body have the feature of adjustable height. The household appliance is balanced by adjusting the height of the feet. Particularly the built-in household appliances, after being placed in a cabin, are brought to a height accommodating with the cabin height and the height adjustment of the household appliance is made by means of the feet. Reaching the rear feet is almost impossible after the built-in household appliance is placed in the cabin. Therefore, the movement of the rear feet is provided by the mechanisms controlled from the front side. In these mechanisms, the height adjustment of the rear feet can be made by means of an adjustment rod extending backwards from a point at the front of the household appliance that can be easily accessible by the user or the service personnel.

In the German Patent Document No. DE4410554, leveling members that are used in a built-in domestic appliance, particularly in a domestic refrigerator, is explained. The leveling members include a rod that can be rotated from the front side of the domestic appliance body and a gearing formed of a worm and worm gear triggered by the rod and the rear feet of the domestic appliance can be adjusted from the front side.

In the International Patent Application No. WO2005115199 a leveling system for a piece of furniture is explained. WO2007/068665 discloses a further household appliance having a leveling system.

The aim of the present invention is the realization of a household appliance comprising a height adjustment mechanism that provides the height of the rear feet thereof to be easily adjusted.

The household appliance realized in order to attain the aim of the present invention and explicated in the claims, comprises a height adjustment mechanism having an adjustment shaft that is accessible from the front side of the household appliance and extending from the front backwards along the base of the body. The height adjustment of the rear feet is made by rotating the adjustment shaft. The height adjustment mechanism furthermore comprises a connector that extends from the adjustment shaft towards the rear feet. An inclined channel is provided on the connector and a pin on the rear feet that is seated in this channel. The linear movement of the connector results in the channel pushing the pin. Since the channel is inclined, when the channel pushes the pin, the pin and the rear foot, whereto it is connected, move upwards/downwards. Thus, the height adjustment of the foot is performed.

In a first embodiment of the present invention, a prismatic nut and a guide that bears the prismatic nut are positioned between the adjustment shaft and the connector in order to transmit the rotational movement of the adjustment shaft to the connector as linear movement. The guide allows only for the linear movement of the prismatic nut. Thus, when the adjustment shaft is rotated, the prismatic nut connected thereto makes linear movement in the guide and transmits this linear movement to the connector that is connected thereto.

The connector comprises two arms that are mounted pivotally to one another from one of their ends. The free end of one of the arms is secured to the prismatic nut and the free end of the other is secured to the base of the body just near the foot. Since the lengths of the arms are fixed, the arms rotate around the points they are connected when the prismatic nut moves linearly. Thus, the angle between the arms change and the pin is provided to move inside the channel again.

In a second embodiment of the present invention, a worm and gear pair is disposed between the adjustment shaft and the connector so that the rotational movement of the adjustment shaft can be transmitted to the connector. When the adjustment shaft is rotated, the worm that is connected to the adjustment shaft also rotates and the gear is provided to move on the worm. As the gear moves, the connector, that is connected thereto, also moves and provides the movement of the pin inside the channel. Similarly, the rear foot is raised/lowered due to the inclined structure of the channel. In an embodiment of the present invention, the foot is secured to the base of the household appliance by means of a bearing bracket. The bearing bracket clasps the foot from above such that a gap remains therebetween to allow for the upwards/downwards movement of the foot. In an embodiment of the present invention, a spring is disposed between the bearing bracket and the foot. Accordingly, the weight of the household appliance is supported not only by the foot but by the spring as well. In the preferred version of this embodiment, the foot comprises a housing that is opened from the center along its entire length. The spring is disposed in the housing and held by the bearing bracket from above.

In an embodiment of the present invention, a pin on each of two sides of the rear foot and two connectors for each foot corresponding to the pins are used. Thus, the height adjustment is provided to be performed more easily and in a balanced manner.

In an embodiment of the present invention, wheels are mounted under the feet in order to move the household appliance easily.

The household appliance realized in order to attain the aim of the present invention is illustrated in the attached figures, where:

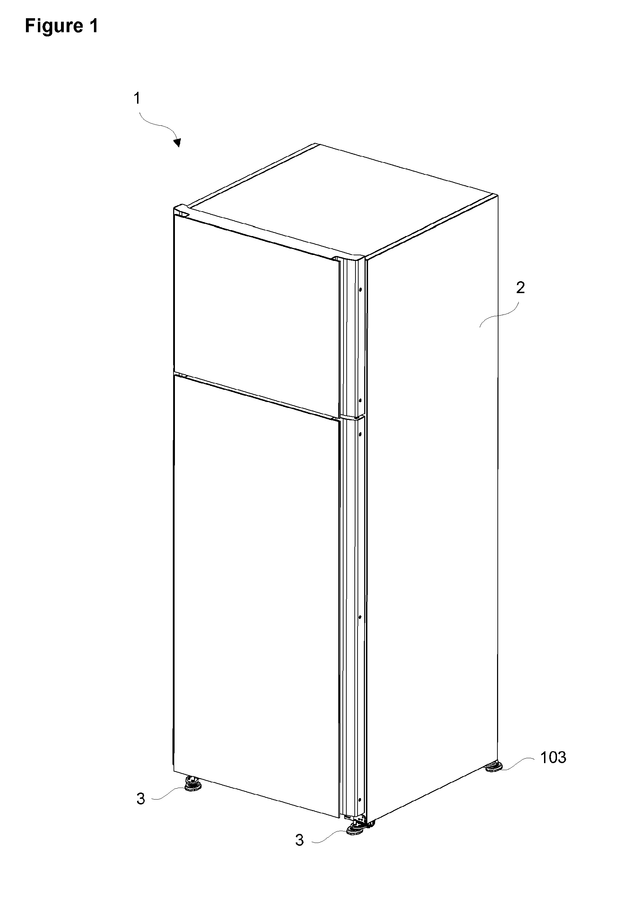

Figure 1 - is the schematic view of a household appliance.

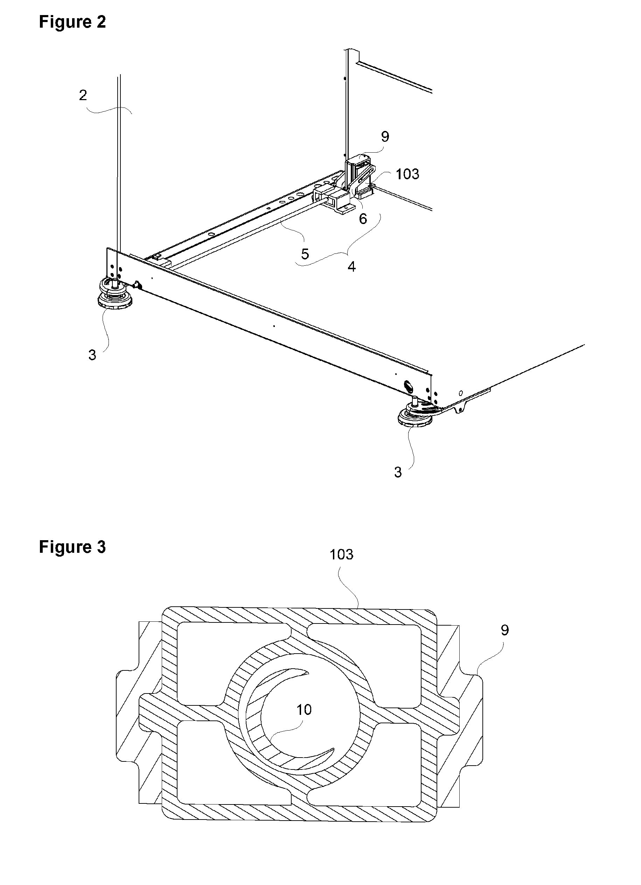

Figure 2 - is the perspective view of the body, the foot and the height adjustment mechanism in an embodiment of the present invention.
Figure 3 - is the top cross-sectional view of the foot, the spring and the bearing bracket in an embodiment of the present invention.

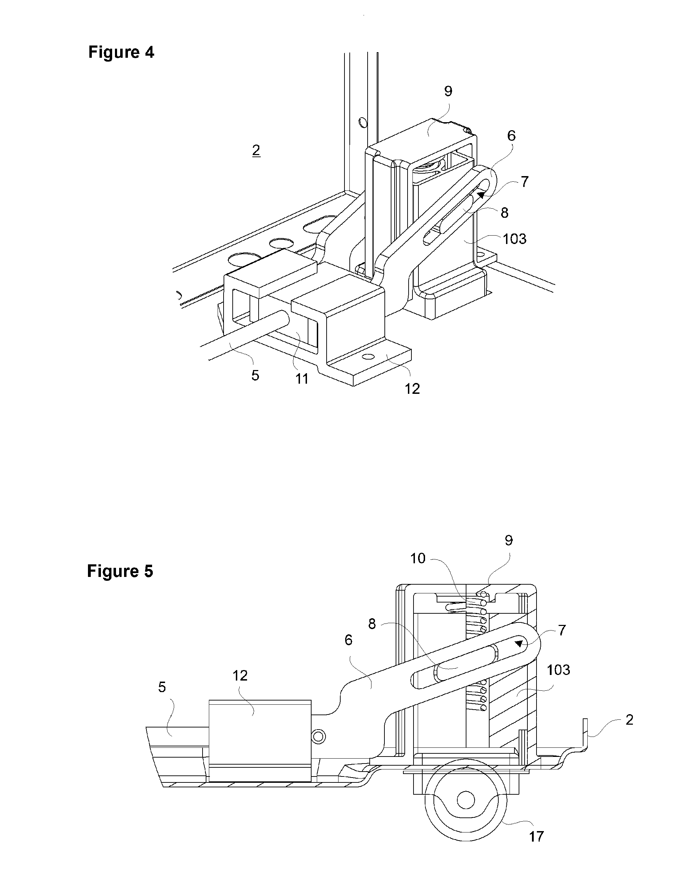

Figure 4 - is the partial perspective view of the body, the foot and the height adjustment mechanism in an embodiment of the present invention.
Figure 5 - is the sideways view of the body, the foot and the height adjustment mechanism in an embodiment of the present invention.

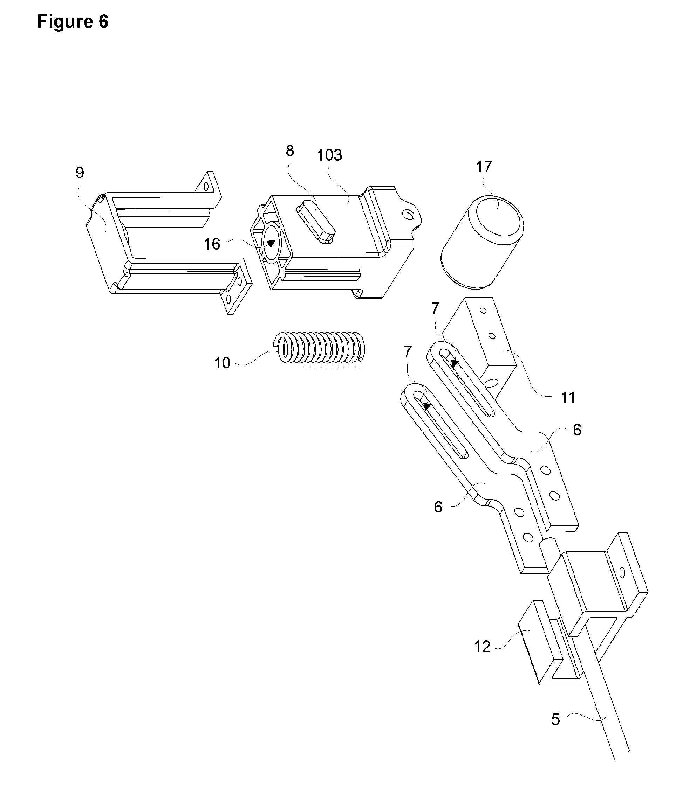

Figure 6 - is the exploded view of the body and the height adjustment mechanism in an embodiment of the present invention.

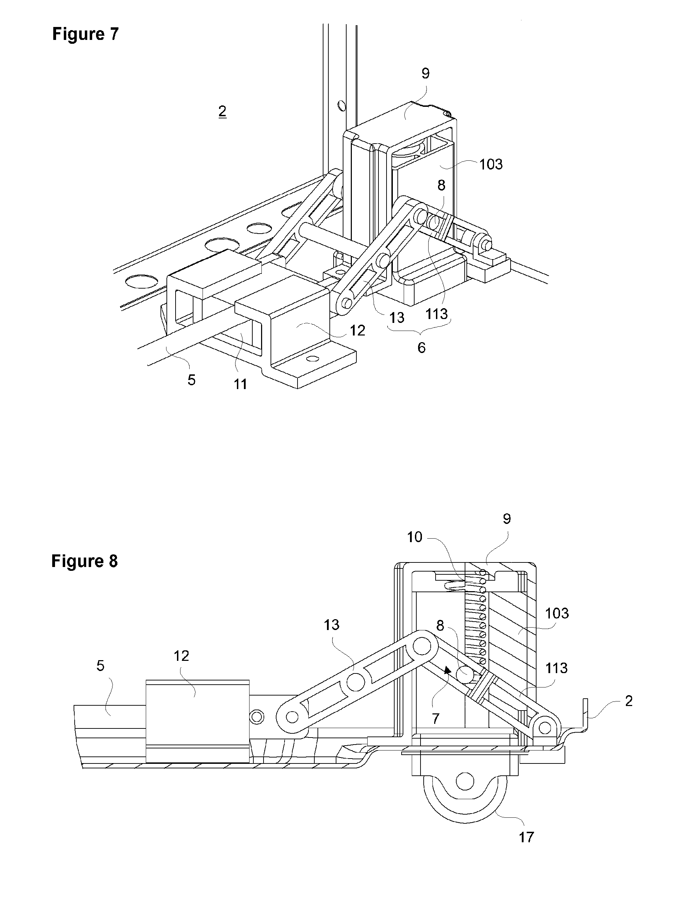

Figure 7 - is the partial perspective view of the body, the foot and the height adjustment mechanism in another embodiment of the present invention.
Figure 8 - is the sideways view of the body, the foot and the height adjustment mechanism in another embodiment of the present invention.

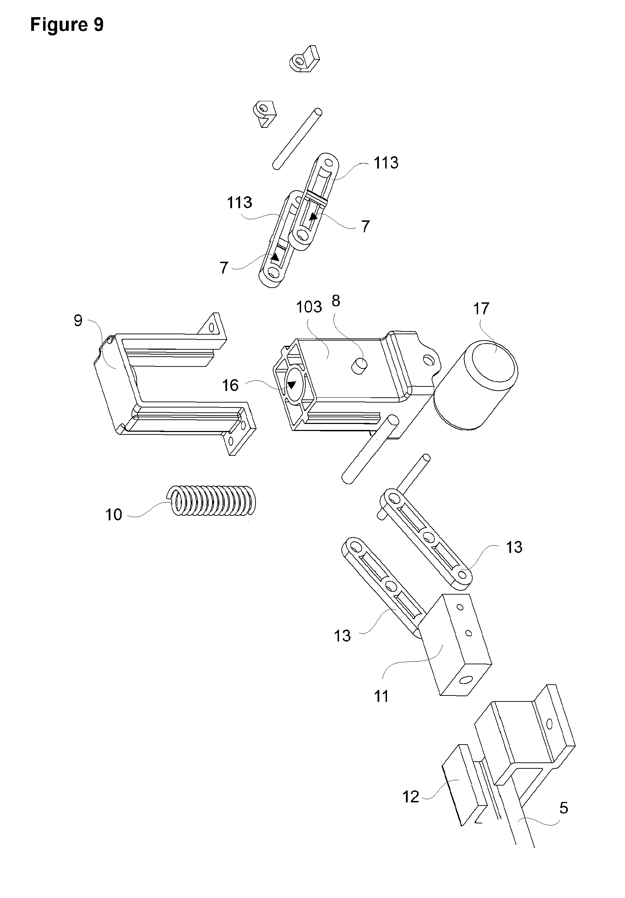

Figure 9 - is the exploded view of the foot and the height adjustment mechanism in another embodiment of the present invention.

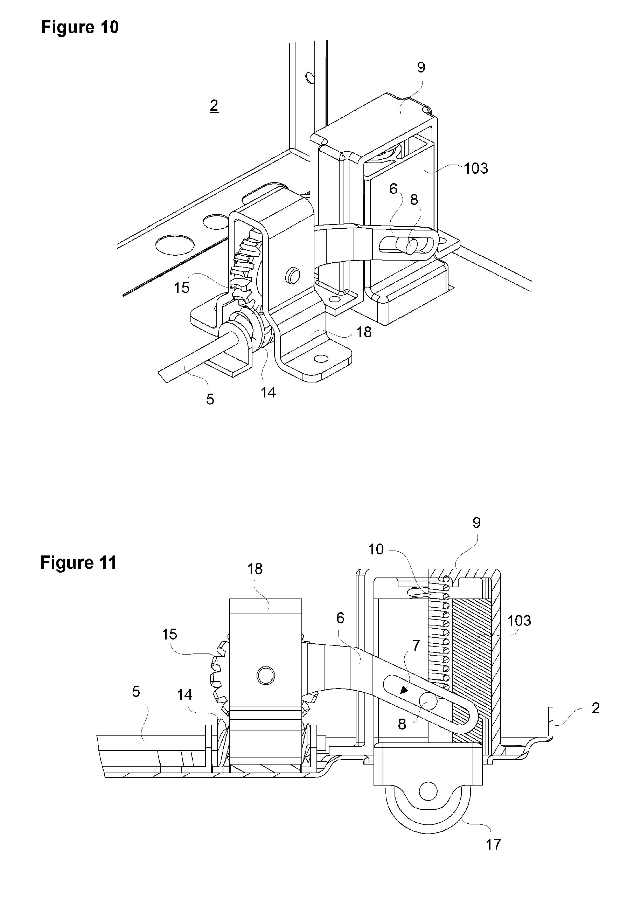

Figure 10 - is the partial perspective view of the body, the foot and the height adjustment mechanism in another embodiment of the present invention.
Figure 11 - is the sideways view of the body, the foot and the height
adjustment mechanism in another embodiment of the present invention.

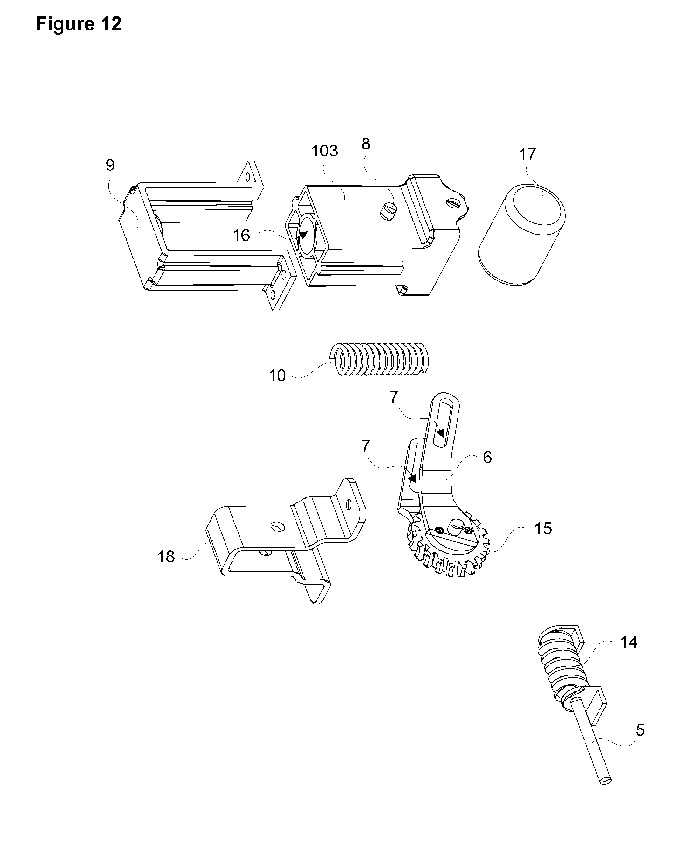

Figure 12 - is the exploded view of the foot and the height adjustment mechanism in another embodiment of the present invention.

The elements illustrated in the figures are numbered as follows:
1. Household appliance
2. Body
3. 103. Foot
4. Height adjustment mechanism
5. Adjustment shaft
6. Connector
7. Channel
8. Pin
9. Bearing bracket
10. Spring
11. Prismatic nut
12. Guide
13. 113. Arm
14. Worm
15. Gear
16. Housing
17. Wheel
18. Retainer

The household appliance (1) of the present invention comprises a body (2), at least one front foot (3) and at least one rear foot (103), supporting the body (2), situated at the front side and the rear side on the base of the body (2).

The household appliance (1) of the present invention comprises at least one height adjustment mechanism (4), providing the height adjustment of the rear foot (103) to be made, having
- a rotatable adjustment shaft (5) extending at the lower side of the body (2), horizontally from the front of the body (2) towards the rear,
- at least one connector (6), extending from the adjustment shaft (5) towards the rear foot (103), transmitting the movement received from the adjustment shaft (5) to the rear foot (103) by partially moving horizontally as a result of the rotational movement of the adjustment shaft (5),
- an inclined channel (7) located on the connector (6) and
- a pin (8) disposed on the rear foot (103), seated into the channel (7), moving in the vertical direction when the connector (6) moves in the horizontal direction. In the household appliance (1) of the present invention, when the height of the rear foot (103) is desired to be adjusted by means of the height adjustment mechanism (4), the user reaches the adjustment shaft (5) from its end located at the front face of the body (2) and rotates the adjustment shaft (5). As the adjustment shaft (5) rotates, the connector (6) connected to the adjustment shaft (5) moves at least partially in the horizontal direction. When the connector (6) moves in the horizontal direction, the channel (7) bears against the pin (8). Due to the inclined structure of the channel (7), the periphery of the channel (7) forces the pin (8) to move in the vertical direction. Thus, the height of the pin (8) and hence of the rear foot (103) whereon it is located changes. The rear foot (103) is raised or lowered depending on the forwards or backwards movement of the connector (6) in the horizontal direction. In the household appliance (1) of the present invention, a sturdy height adjustment mechanism (4) is realized that provides a balanced height adjustment of the rear foot (103) to be performed by means of the connector (6), situated between the adjustment shaft (5) and the rear foot (103).

In an embodiment of the present invention, the household appliance (1) comprises a U-shaped bearing bracket (9) that clasps the foot (3, 103) from above so that a gap remains therebetween, and provides the foot (3, 103) to be mounted to the base of the body (2).

In an embodiment of the present invention, the household appliance (1) furthermore comprises a spring (10) that is disposed at least partially between the bearing bracket (9) and the foot (3, 103). Thus, the weight of the household appliance (1) is at least partially balanced by the compression force of the spring (10). In the preferred version of this embodiment, the foot (3, 103) comprises a housing (16) wherein the spring (10) is partially seated.

In a first embodiment of the present invention, the height adjustment mechanism (4) comprises a prismatic nut (11) disposed between the adjustment shaft (5) and the connector (6) and a guide (12) that allows only the linear movement of the prismatic nut (11) by bearing the prismatic nut (11). Thus, the rotational movement of the adjustment shaft (5) is transmitted to the connector (6) as linear movement.

In the first embodiment of the present invention, the connector (6) comprises two arms (13, 113), one of them rotatably pivoted to the prismatic nut (11) from one end, the other to the base of the body (2) from one end, and to each other from their free ends. In this embodiment, upon moving in the guide (12) in the linear direction as a result of the user rotating the adjustment shaft (5), the prismatic nut (11) pushes the first arm (13) that is connected thereto. With the effect of this force, the first arm (13), pivoted to the second arm (113) from its other end, makes translatory movement by rotating. As the result of this movement, the second arm (113) rotates around the point wherefrom it is pivoted to the base of the body (2). In other words, the arms (13, 113) make scissor-like movement. In this case, the pin (8) moves upwards/downwards by sliding in the inclined channel (7) on the connector (6). Thus, the rear foot (113) whereon the pin (8) is located is also raised/lowered.

In a second embodiment of the present invention, the height adjustment mechanism (4) comprises a worm (14) at the end of the adjustment shaft (5) inside the body (2) and a gear (15) disposed at the end of the connector (6) facing the adjustment shaft (5), mounted on the worm (14) so as to function together with the worm (14) and at least one retainer (18) providing the gear (15) to be rotatably secured on the base of the body (2). The worm (14) and the gear (15) pair provide the rotational movement of the adjustment shaft (5) to be transmitted to the connector (6).

In an embodiment of the present invention, each height adjustment mechanism (4) comprises two pins (8) disposed on two sides of the rear foot (103) and two connectors (6) that extend from the adjustment shaft (5) towards the rear foot (103) up to the level of each pin (8). Thus, the height adjustment of the rear foot (103) is provided to be performed more easily.

In an embodiment of the present invention, the household appliance (1) comprises wheels (17) that are mounted under the feet (3, 103). Accordingly, the household appliance (1) is provided to be moved easily.

In the household appliance (1) of the present invention, a height adjustment mechanism (4) is realized that enables a robust and balanced adjustment and the height adjustment of the rear foot (103) is provided to be performed easily from the front side of the body (2).

It is to be understood that the present invention is not limited by the embodiments disclosed above and a person skilled in the art can easily introduce different embodiments. These should be considered within the scope of the protection postulated by the claims of the present invention.

## Claims

1. A household appliance (1) comprising
- a body (2),
- at least one front foot (3) and at least one rear foot (103) supporting the body (2), situated at the front side and the rear side on the base of the body (2),
- at least one height adjustment mechanism (4), having a rotatable adjustment shaft (5) underneath the body (2), extending horizontally from the front side of the body (2) towards the rear, providing the height adjustment of the rear foot (103) to be performed,
the height adjustment mechanism (4) having
- at least one connector (6), extending from the adjustment shaft (5) towards the rear foot (103), transmitting the movement received from the adjustment shaft (5) to the rear foot (103) by partially moving horizontally as a result of the rotational movement of the adjustment shaft (5),
- an inclined channel (7) located on the connector (6) and
- a pin (8) disposed on the rear foot (103), seated into the channel (7), moving in the vertical direction when the connector (6) moves in the horizontal direction,
the height adjustment mechanism (4) further comprising a prismatic nut (11) disposed between the adjustment shaft (5) and the connector (6) and a guide (12) that allows the linear movement of the prismatic nut (11) by bearing the prismatic nut (11),
**characterized by** the connector (6) comprising two arms (13, 113), one of them rotatably pivoted to the prismatic nut (11) from one end, the other to the base of the body (2) from one end, and to each other from their free ends.

2. A household appliance (1) comprising
- a body (2),
- at least one front foot (3) and at least one rear foot (103) supporting the body (2), situated at the front side and the rear side on the base of the body (2),
- at least one height adjustment mechanism (4), having a rotatable adjustment shaft (5) underneath the body (2), extending horizontally from the front side of the body (2) towards the rear, providing the height adjustment of the rear foot (103) to be performed,
the height adjustment mechanism (4) having
- at least one connector (6), extending from the adjustment shaft (5) towards the rear foot (103), transmitting the movement received from the adjustment shaft (5) to the rear foot (103) as a result of the rotational movement of the adjustment shaft (5),
- an inclined channel (7) located on the connector (6) and
- a pin (8) disposed on the rear foot (103), seated into the channel (7), moving in the vertical direction when the connector (6) moves in the horizontal direction,
**characterized by** the height adjustment mechanism (4) further comprising a worm (14) at the end of the adjustment shaft (5) inside the body (2) and a gear (15) disposed at the end of the connector (6) facing the adjustment shaft (5), mounted on the worm (14) so as to function together with the worm (14) and at least one retainer (18) providing the gear (15) to be rotatably secured on the base of the body (2).

3. A household appliance (1) as in Claim 1 or 2 **characterized by** a U-shaped bearing bracket (9) that clasps the foot (3, 103) from above so that a gap remains therebetween and provides the rear foot (103) to be mounted to the base of the body (2).

4. A household appliance (1) as in Claim 3, **characterized by** a spring (10) that is disposed at least partially between the bearing bracket (19) and the foot (3, 103).

5. A household appliance (1) as in Claim 3 or 4, **characterized by** the foot (3, 103) having a housing (16) wherein the spring (10) is partially seated.

6. A household appliance (1) as in any of the above Claims, **characterized by** the height adjustment mechanism (4) comprising two pins (8) disposed on two sides of the rear foot (103) and two connectors (6) that extend from the adjustment shaft (5) towards the rear foot (103) up to the level of each pin (8).

7. A household appliance (1) as in any one of the above Claims, **characterized by** wheels (17) that are mounted under the feet (3, 103).

8. A household appliance (1) as in any one of the above claims, which is a washing machine.

9. A household appliance (1) as in any one of the above claims which is a dishwasher.

10. A household appliance (1) as in any one of the above claims, which is a laundry dryer machine.

11. A household appliance (1) as in any one of the above claims which is a refrigerator.

12. A household appliance (1) as in any one of the above claims, which is an oven.

## Patentansprüche

1. Haushaltsgerät (1), umfassend:
- einen Gehäusekörper (2),
- wenigstens einen vorderen Fuß (3) und wenigstens einen hinteren Fuß (103), die den Gehäusekörper (2) tragen und an der Vorderseite und der Hinterseite der Basis des Gehäusekörpers (2) angeordnet sind,
- wenigstens einen Höheneinstellmechanismus (4) mit einer drehbaren Einstellungswelle (5) unter dem Gehäusekörper (2), der sich von der Vorderseite des Gehäusekörpers (2) horizontal zur Hinterseite erstreckt und das Durchführen der Höheneinstellung des hinteren Fußes (103) ermöglicht,
wobei der Höheneinstellmechanismus (4) Folgendes aufweist:
- wenigstens ein Verbindungsglied (6), das sich von der Einstellungswelle (5) zum hinteren Fuß (103) erstreckt und die Bewegung von der Einstellungswelle (5) auf den hinteren Fuß (103) überträgt, indem es sich aufgrund der Drehbewegung der Einstellungswelle (5) teilweise horizontal bewegt,
- einen schrägen Kanal (7), der am Verbindungsglied (6) angeordnet ist, und
einen Stift (8), der am hinteren Fuß (103) angeordnet ist und in dem Kanal (7) sitzt und sich in vertikaler Richtung bewegt, wenn sich das Verbindungsglied (6) in horizontaler Richtung bewegt,
wobei der Höheneinstellmechanismus (4) ferner eine quaderförmige Mutter (11), die zwischen der Einstellungswelle (5) und dem Verbindungsglied (6) angeordnet ist, und eine Führung (12) umfasst, die die lineare Bewegung der quaderförmigen Mutter (11) durch Anlage an der quaderförmigen Mutter (11) gestattet,
**dadurch gekennzeichnet, dass** das Verbindungsglied (6) zwei Arme (13, 113) umfasst, von denen einer an einem Ende an der quaderförmigen Mutter (11) und der andere an einem Ende an der Basis des Gehäusekörpers (2) drehbar angebracht ist, und beide an ihren freien Enden aneinander.

2. Haushaltsgerät (1), umfassend:
- einen Gehäusekörper (2),
- wenigstens einen vorderen Fuß (3) und wenigstens einen hinteren Fuß (103), die den Gehäusekörper (2) tragen und an der Vorderseite und der Hinterseite der Basis des Gehäusekörpers (2) angeordnet sind,
- wenigstens einen Höheneinstellmechanismus (4) mit einer drehbaren Einstellungswelle (5) unter dem Gehäusekörper (2), der sich von der Vorderseite des Gehäusekörpers (2) horizontal zur Hinterseite erstreckt und das Durchführen der Höheneinstellung des hinteren Fußes (103) ermöglicht,
wobei der Höheneinstellmechanismus (4) Folgendes aufweist:
- wenigstens ein Verbindungsglied (6), das sich von der Einstellungswelle (5) zum hinteren Fuß (103) erstreckt und die Bewegung von der Einstellungswelle (5) aufgrund der Drehbewegung der Einstellungswelle (5) auf den hinteren Fuß (103) überträgt,
- einen schrägen Kanal (7), der am Verbindungsglied (6) angeordnet ist, und
einen Stift (8), der am hinteren Fuß (103) angeordnet ist und in dem Kanal (7) sitzt und sich in vertikaler Richtung bewegt, wenn sich das Verbindungsglied (6) in horizontaler Richtung bewegt,
**dadurch gekennzeichnet, dass** der Höheneinstellmechanismus (4) ferner eine Schnecke (14) an dem Ende der Einstellungswelle (5) innerhalb des Gehäusekörpers (2) und ein Zahnrad (15), das an dem Ende des Verbindungsglieds (6) angeordnet ist, das der Einstellungswelle (5) zugewandt ist und an der Schnecke (14) angebracht ist, derart, dass es mit der Schnecke (14) zusammenwirkt, und wenigstens einen Halter (18) umfasst, der dafür sorgt, dass das Zahnrad (15) drehbar an der Basis des Gehäusekörpers (2) gesichert ist.

3. Haushaltsgerät (1) nach Anspruch 1 oder 2, **gekennzeichnet durch** eine U-förmige Lagerhalterung (9), die den Fuß (3, 103) von oben ergreift, derart, dass ein Abstand dazwischen verbleibt, und dafür sorgt, dass der hintere Fuß (103) an der Basis des Gehäusekörpers (2) angebracht ist.

4. Haushaltsgerät (1) nach Anspruch 3, **gekennzeichnet durch** eine Feder (10), die wenigstens teilweise zwischen der Lagerhalterung (19) und dem Fuß (3, 103) angeordnet ist.

5. Haushaltsgerät (1) nach Anspruch 3 oder 4, **dadurch gekennzeichnet, dass** der Fuß (3, 103) ein Gehäuse (16) aufweist, in dem die Feder (10) teilweise sitzt.

6. Haushaltsgerät (1) nach einem der vorangehenden Ansprüche, **dadurch gekennzeichnet, dass** der Höheneinstellmechanismus (4) zwei Stifte (8), die an zwei Seiten des hinteren Fußes (103) angeordnet sind, und zwei Verbindungsglieder (6) umfasst, die sich von der Einstellungswelle (5) bis auf die Höhe des jeweiligen Stiftes (8) zum hinteren Fuß (103) erstrecken.

7. Haushaltsgerät (1) nach einem der vorangehenden Ansprüche, **gekennzeichnet durch** Räder (17), die unter den Füßen (3, 103) angebracht sind.

8. Haushaltsgerät (1) nach einem der vorangehenden Ansprüche, das eine Waschmaschine ist.

9. Haushaltsgerät (1) nach einem der vorangehenden Ansprüche, das ein Geschirrspüler ist.

10. Haushaltsgerät (1) nach einem der vorangehenden Ansprüche, das ein Wäschetrockner ist.

11. Haushaltsgerät (1) nach einem der vorangehenden Ansprüche, das ein Kühlschrank ist.

12. Haushaltsgerät (1) nach einem der vorangehenden Ansprüche, das ein Ofen ist.

## Revendications

1. Un électroménager (1) comprenant :
- un corps (2),
- au moins un pied avant (3) et au moins un pied arrière (103) qui supportent le corps (2) et situés au côté avant et au côté arrière sur la base du corps (2),
- au moins un mécanisme d'ajustement de hauteur (4) qui présente un arbre d'ajustement rotatif (5) sous le corps (2), qui s'étend horizontalement à partir du côté avant du corps (2) vers l'arrière et qui permet l'ajustement de la hauteur du pied arrière (103),
le mécanisme d'ajustement de hauteur (4) présentant
- au moins un connecteur (6) qui s'étend à partir de l'axe d'ajustement (5) vers le pied arrière (103), qui transmet le mouvement reçu de l'axe d'ajustement (5) au pied arrière (103) en se déplaçant partiellement horizontalement à la suite du mouvement de rotation de l'axe d'ajustement (5),
- un canal incliné (7) situé sur le connecteur (6) et
- une goupille (8) qui est disposée sur le pied arrière (103), qui est placée dans le canal (7) et qui se déplace dans la direction verticale lorsque le connecteur (6) se déplace dans la direction horizontale,
le mécanisme d'ajustement de hauteur (4) comprenant en outre un écrou prismatique (11) disposé entre l'axe d'ajustement (5) et le connecteur (6) et un guide (12) qui permet le mouvement linéaire de l'écrou prismatique (11) en supportant l'écrou prismatique (11),
**caractérisé par** le connecteur (6) comprenant deux bras (13, 113), l'un d'eux articulé de manière rotative à l'écrou prismatique (11) à partir d'une extrémité et l'autre à la base du corps (2) à partir d'une extrémité et l'un à l'autre à partir de leurs extrémités libres.

2. Un électroménager (1) comprenant :
- un corps (2),
- au moins un pied avant (3) et au moins un pied arrière (103) qui supportent le corps (2) et situés au côté avant et au côté arrière sur la base du corps (2),
- au moins un mécanisme d'ajustement de hauteur (4) qui présente un arbre d'ajustement rotatif (5) sous le corps (2), qui s'étend horizontalement à partir du côté avant du corps (2) vers l'arrière et qui permet l'ajustement de la hauteur du pied arrière (103),
le mécanisme d'ajustement de hauteur (4) présentant
- au moins un connecteur (6) qui s'étend à partir de l'axe d'ajustement (5) vers le pied arrière (103), qui transmet le mouvement reçu de l'axe d'ajustement (5) au pied arrière (103) à la suite du mouvement de rotation de l'axe d'ajustement (5),
- un canal incliné (7) situé sur le connecteur (6) et
- une goupille (8) qui est disposée sur le pied arrière (103), qui est placée dans le canal (7) et qui se déplace dans la direction verticale lorsque le connecteur (6) se déplace dans la direction horizontale,
**caractérisé par** le mécanisme d'ajustement de hauteur (4) comprenant en outre une roue à vis sans fin (14) à l'extrémité de l'axe d'ajustement (5) dans le corps (2) et une roue dentée (15) disposée à l'extrémité du connecteur (6) faisant face à l'axe d'ajustement (5) et montée à la roue à vis sans fin (14) de manière à fonctionner avec la roue à vis sans fin (14) et au moins un élément de retenue (18) permettant la fixation de la roue dentée (15) de manière rotative sur la base du corps (2).

3. Un électroménager (1) selon la Revendication 1 ou 2, **caractérisé par** une équerre de support en U (9) qui serre le pied (3, 103) par le haut de telle sorte qu'un espace reste entre eux et permet le montage du pied arrière (103) à la base du corps (2).

4. Un électroménager (1) selon la Revendication 3, **caractérisé par** un ressort (10) qui est disposé au moins partiellement entre l'équerre de support (19) et le pied (3, 103).

5. Un électroménager (1) selon la Revendication 3 ou 4, **caractérisé par** le pied (3, 103) présentant un logement (16) dans lequel le ressort (10) est partiellement placé.

6. Un électroménager (1) selon l'une quelconque des revendications précédentes, **caractérisé par** le mécanisme de réglage en hauteur (4) comprenant deux goupilles (8) qui sont disposées sur les deux côtés du pied arrière (103) et deux connecteurs (6) qui s'étendent à partir de l'axe d'ajustement (5) vers le pied arrière (103) jusqu'au niveau de chaque goupille (8).

7. Un électroménager (1) selon l'une quelconque des revendications précédentes, **caractérisé par** des roues (17) qui sont montées sous les pieds (3, 103).

8. Un électroménager (1) selon l'une quelconque des revendications précédentes, qui est une machine à laver.

9. Un électroménager (1) selon l'une quelconque des revendications précédentes, qui est un lave-vaisselle.

10. Un électroménager (1) selon l'une quelconque des revendications précédentes, qui est une machine à sécher.

11. Un électroménager (1) selon l'une quelconque des revendications précédentes, qui est un réfrigérateur.

12. Un électroménager (1) selon l'une quelconque des revendications précédentes, qui est un four.
